# EUROPÄISCHE PATENTSCHRIFT

(11) **EP 1 638 157 B1**
(45) Veröffentlichungstag und Bekanntmachung des Hinweises auf die Patenterteilung: **12.08.2009**
(21) Anmeldenummer: 05017813.6
(22) Anmeldetag: 17.08.2005
(51) Int. Cl.: H01M 2/16

(54) **Separator für Elektrochemischen Bleiakkumulator**
Separator for lead acid battery
Séparateur de batterie au plomb

(30) Priorität: 17.09.2004 DE 102004045095
(43) Veröffentlichungstag der Anmeldung: 22.03.2006
(73) Patentinhaber: VB Autobatterie GmbH & Co. KGaA, 30419 Hannover (DE)
(72) Erfinder: Johns, Sandra, 31157 Sarstedt (DE)
(74) Vertreter: Gerstein, Hans Joachim

(56) Entgegenhaltungen:
- EP-A- 0 121 771
- WO-A-03/026038
- US-A- 5 376 477

## Beschreibung

Die Erfindung betrifft einen elektrochemischen Bleiakkumulator mit einer Vielzahl alternierend angeordneter bleihaltiger Anoden- und Kathodenplatten, mit Separatoren jeweils zwischen benachbarten Anoden- und Kathodenplatten, und mit die Anoden-und Kathodenplatten sowie die Separatoren umgebendes Elektrolyt, wobei die Separatoren jeweils eine mikroporöse Separatorschicht aus Polyethylen und auf jeder Oberfläche der Separatorschicht eine Faserschicht aus Polyestervlies hat und die mikroporösen Separatorschichten und die Faserschichten eine Dicke von mindestens 100 µm haben.

In dem US-Patent 5,962,161 ist ein elektrochemischer Bleiakkumulator mit porösen Separatoren zwischen den Elektrodenplatten beschrieben. Die Separatoren sind aus extrem feinem Fasermaterial mit einem Durchmesser von weniger als 5 µm gebildet. Die faserhaltige Separatorschicht ist mit einem Lösungsmittel behandelt, um von Säure durchtränkt werden zu können und die flüssige Säure komplett zu absorbieren.

Weiterhin ist aus der US 1,056,273 ein elektrochemischer Bleiakkumulator mit Separatoren zwischen den Elektrodenplatten beschrieben, die eine zwischen zwei Vliesschichten aus säureresistentem thermoplastischem Harz angeordnete Schicht aus Kieselgur haben. Die Vliesschichten können an den Rändern miteinander verbunden werden und Taschen bilden, in die die Kieselgur-Schicht aufgenommen ist. Die mikroporöse Kieselgur-Schicht ist mit etwa 500 µm relativ dick und führt zusammen mit der Vliesschicht zu einer relativ starken Immobilisierung des Elektrolyten aufgrund einer kapillaren Saugfähigkeit.

Weiterhin ist in dem US-Patent 6,689,509 B2 ein elektrochemischer Bleiakkumulator mit einer Faserschicht beschrieben, die von zwei mikroporösen Polyethylen-Membranen eingeschlossen und mit diesen beispielsweise durch Kleben,Ultraschallschweißen oder Vernähen verbunden ist.

In der DE 19 49 958 C3 ist ein Separator für wartungsfreie Akkumulatoren offenbart, bei dem ultrafeine Fasermatten mit einem Faserdurchmesser von weniger als 1 µm eingesetzt sind. Die verwendeten Schichten haben eine Porosität von 70 bis 95 %. Für größere Schichtdicken wird vorgeschlagen, dass mikroporöses Material und ultrafeine Fasermatten derart abwechselnd aufeinander zu folgen, dass die äußeren, an den Elektroden anliegenden Schichten stets aus ultrafeinen Fasermatten bestehen.

Aus der EP 0 811 479 B1 ist ein Separator mit einer mikroporösen Polyolefin-Membran und einer Vliesschicht auf mindestens einer Oberfläche der mikroporösen Membran für eine Lithium-lonen-Wickelbatterie beschrieben. Die Membran hat eine Dicke von 25 bis 200 µm und die Vliesschichten eine Dicke von 30 bis 500 µm. Die Fasern der Vliesschicht haben einen Durchmesser von 0,1 bis 500 µm.

In der WO 98/12759 A1 ist ein Separator mit einer mindestens zweischichtigen elastischen Fasermatte aus zufällig ausgerichteten, verfilzten Glasmikrofasern beschrieben. Durch die feinen miteinander verfilzten Faserschichten wird der Elektrolyt relativ stark immobilisiert.

Gegenüber der nassen Blei-Säure-Batterien hat die Immobilisierung von Elektrolyt, insbesondere in AGM-Batterien, folgende Nachteile:
- schlechtes Preis- Leistungsverhältnis;
- längere Formationsdauer / schlechtere Formierbarkeit;
- schlechte Massenausnutzung, geringere Leistungsfähigkeit;
- zusätzlich teure Komponenten, z. B. Glasvlies und Ventilstopfen;
- teures Material für den Batteriekasten, z. B. auf Grund der höheren mechanischen Festigkeit und Talkum gefülltes Polypropylen PP;
- dickwandige, schwere Batteriekästen;
- erhöhter Montageaufwand (gleichzeitiger Satzpressdruck);
- spezielle positive und negative Massen;
- spezielle Befülleinrichtungen für die Schwefelsäure;
- erhöhter Prüfaufwand

EP 0121 771 A1 offenbart einen Separator für Bleiakkumulatoren, bei dem ein Glasfaservlies mindestens auf einer Seite über seine gesamte Fläche mit einer mikroporösen Kunststoffschicht aus einem Polyolefin fest verbunden ist. Bei diesem zwischen porösen Schichten liegenden Vlies wird der Innenwiderstand stark angehoben und ein Protonen- und Sulfationenaustausch wird behindert. Zudem wird die aktive Masse nicht hinreichend durch die mikroporösen Kunststoffschichten gehalten.

US 5,376,477 A offenbart einen Bleiakkumulator mit Separatoren, die aus drei Schichten gebildet sind. Eine mikroporöse Separatorschicht wird zwischen zwei Faserschichten gelegt, um einen Separatorverbund zu schaffen, der um die Elektroden gewickelt wird.

Das Problem der bekannten Separatoren besteht darin, dass durch die feinen und / oder dicken Vliesschichten der Elektrolyt relativ stark festgelegt ist, da die Säure kapillar gehalten wird.

Aufgabe der vorliegenden Erfindung ist es daher, einen verbesserten elektrochemischen Bleiakkumulator zu schaffen, bei dem die Adhäsion des Elektrolyten in den

Separatoren zwischen den Elektrodenplatten verringert ist. Der Bleiakkumulator sollte zudem preisgünstig herstellbar sein.

Die Aufgabe wird durch einen elektrochemischen Bleiakkumulator mit den Merkmalen des Anspruchs 1 gelöst.

Die Faserschichten sind aus Polyestervlies und an Randbereichen fest mit der zugeordneten Separatorschicht verbunden, indem die Faserschichten an den Randbereichen mit einer Ultraschallschweißnaht mit der zugeordneten Separatorschicht ultraschallverschweißt ist.

Im Unterschied zu den herkömmlichen Separatoren mit eine mikroporöse Separatorschicht abdeckenden Faserschichten wird vorgeschlagen, dass die Faserschichten eine relativ große Faserlänge und relativ großen Faserdurchmesser haben und die mikroporöse Separatorschicht relativ dick ist. Durch die an sich bekannte Verwendung einer mikroporösen Separatorschicht aus Polyethylen können die Faserschichten an den Randbereichen fest mit der zugeordneten Separatorschicht durch Ultraschallverschweißen verbunden werden.

Durch die relativ große Faserlänge und den relativ großen Faserdurchmesser wird erreicht, dass der Elektrolyt nicht kapillar gehalten wird und in den drei Schichten, nämlich den Faserschichten und der Separatorschicht unterschiedliche Adhäsionen des Elektrolyten auftreten. Hierzu wird die Saugfähigkeit der Faserschichten durch die Wahl der relativ großen Faserlänge und Faserdurchmessers erhöht.

Dabei wurde erkannt, dass sich dreischichtige Separatoren, bei denen ein Vlies zwischen zwei mikroporöse Schichten eingebaut ist, für Starterbatterien nicht verwenden lassen. Vielmehr sollte die Masse durch die aussenliegenden Vliese gehalten werden. Diese Funktionalität wird durch poröse Schichten nicht aufgebracht. Zudem wurde bei zwischen porösen Schichten liegendem Vlies der Innenwiderstand stark angehoben werden und ein Protonen- und Sulfationenaustausch nicht möglich sein. Damit käme die Stromentnahme aus der Batterie zum Erliegen.

Die Separatorschichten können auch auf mindestens einer Oberfläche eine Vielzahl von Rippen haben, so dass der dreischichtige Separator immer noch eine ausreichend ebene Fläche bildet, die an den Elektrodenplatten flächendeckend anliegen kann.

Die Faserschichten beispielsweise ein Polyolefinfaservlies sein. In Verbindung mit der mikroporösen Polyethylen-Separatorschicht können die Faserschichten dann an den Randbereichen mit der Separatorschicht ultraschallverschweißt werden. Hierdurch ist eine preiswerte und dauerhafte Verbindung der Faserschicht mit der Separatorschicht gewährleistet.

Die Faserschichten haben vorzugsweise eine Dicke von bis zu 600 µm und die Separatorschichten eine Dicke von bis zum 400 µm. Die Separatoren sind damit mit etwa 300 µm bis 1600 µm relativ dick.

Die Porosität der Separatorschichten liegt vorzugsweise in einer Größenordnung von 50 bis 70 %.

Die Erfindung wird nachfolgend anhand der beigefügten Zeichnung näher erläutert. Es zeigt:

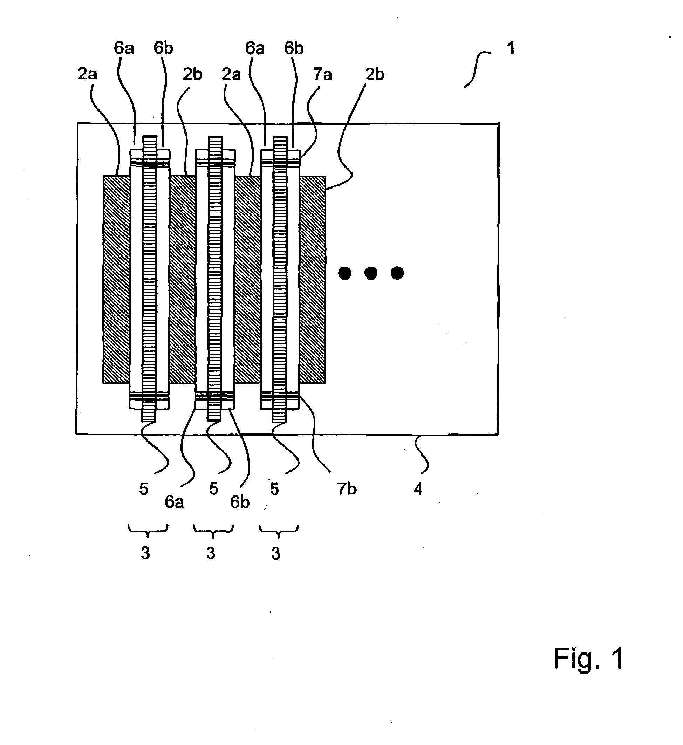

Figur 1 - Draufsicht auf einen Ausschnitt eines elektrochemischen Bleiakkumulators mit alternierend angeordneten Anoden- und Kathodenplatten und zwischen liegenden Separatoren.

Die Figur 1 lässt einen Aussicht eines elektrochemischen Bleiakkumulators 1 mit einer Vielzahl alternierend angeordneter bleihaltiger Anoden- und Kathodenplatten 2a, 2b erkennen, zwischen denen Separatoren 3 angeordnet sind. Die Anoden- und Kathodenplatten 2a, 2b mit den Separatoren 3 sind in einem Gefäß 4 aufgenommen, das mit Elektrolyt gefüllt ist.

Die Separatoren 3 bestehen jeweils aus einer mikroporösen Separatorschicht 5 aus Polyethylen, die auf beiden Seiten durch eine Faserschicht 6a, 6b eingeschlossen ist. Die Faserschichten 6a, 6b sind an den Randbereichen mit einer Ultraschallnaht 7a, 7b mit der zugeordneten Separatorschicht 5 ultraschallverschweißt. Dies wird durch die Auswahl von Polyethylen als Separatorschichtmaterial und Polyester, insbesondere Polyolefin für die Faserschichten 6a, 6b in Form eines Faservlieses ggf. mit Glasanteil möglich.

Die Faserschichten 6a, 6b können aber auch thermisch, durch Vernähen oder auf sonstige Weise mit der Separatorschicht 5 verbunden werden.

Die Separatorschichten 5 aus Polyethylen können ggf. auch Kieselsäure enthalten.

Wesentlich ist, dass die Faserlänge mehr als 1 mm und die Faserdicke der Faserschichten 6a, 6b mehr als 1 µm beträgt, so dass der Elektrolyt nicht kapillar gehalten wird. Die hierbei auftretenden unterschiedlichen Adhäsionen des Elektrolyten in den Faser- und Separatorschichten 6, 5 sind vorteilhaft. Zudem wird durch die relativ große Fasenlänge und die relativ großen Faserdicken die Saugfähigkeit der Faserschichten 6a, 6b reduziert.

Durch Variation der Grunddicken der beiden Faserschichten 6a, 6b und der Separatorschicht 5 im Bereich von 100 µm bis 600 µm für die Faserschichten und 100 µm bis 400 µm für die Separatorschichten kann die Gesamtdicke des Separators eingestellt werden. Wesentlich dabei ist, dass zwischen zwei benachbarten Anoden-und Kathodenplatten 2a, 2b lediglich ein drei-schichtiger Separator 3 angeordnet ist.

Durch eine Vielzahl von Rippen auf der Oberfläche der Separatorschichten 5 kann eine gewisse Säurebewegung zwischen den Anoden- und Kathodenplatten 2a, 2b ermöglicht werden.

## Patentansprüche

1. Elektrochemischer Bleiakkumulator (1) mit einer Vielzahl alternierend angeordneter bleihaltiger Anoden- und Kathodenplatten (2a, 2b), mit Separatoren (3) jeweils zwischen benachbarten Anoden- und Kathodenplatten (2a, 2b), und mit die Anoden- und Kathodenplatten (2a, 2b) sowie die Separatoren (3) umgebendes Elektrolyt, wobei die Separatoren jeweils eine mikroporöse Separatorschicht (5) aus Polyethylen und auf jeder Oberfläche der Separatorschicht (5) eine Faserschicht (6a, 6b) und die mikroporösen Separatorschichten (5) und die Faserschichten (6a, 6b) eine Dicke von jeweils mindestens 100 µm haben, und wobei die durchschnittliche Faserlänge der Faserschichten mehr als 1 mm und der durchschnittliche Faserdurchmesser der Faserschichten (6a, 6b) mehr als 1 µm beträgt, **dadurch gekennzeichnet, dass** die Faserschichten (6a, 6b) aus Polyestervlies gebildet und an Randbereichen fest mit der zugeordneten Separatorschicht (5) verbunden sind, indem die Faserschichten (6a, 6b) an den Randbereichen mit einer Ultraschallschweißnaht (7a, 7b) mit der zugeordneten Separatorschicht (5) ultraschallverschweißt sind.

2. Elektrochemischer Bleiakkumulator (1) nach Anspruch 1, **dadurch gekennzeichnet, dass** die Separatorschichten (5) auf mindestens einer Oberfläche eine Vielzahl von Rippen haben.

3. Elektrochemischer Bleiakkumulator (1) nach einem der vorhergehenden Ansprüche, **dadurch gekennzeichnet, dass** die Faserschichten (6a, 6b) als als Polyolefinfaservlies, ausgebildet sind.

4. Elektrochemischer Bleiakkumulator (1) nach einem der vorhergehenden Ansprüche, **dadurch gekennzeichnet, dass** die Faserschichten (6a, 6b) eine Dicke von bis zu 600 µm haben.

5. Elektrochemischer Bleiakkumulator (1) nach einem der vorhergehenden Ansprüche, **dadurch gekennzeichnet, dass** die Separatorschichten (5) eine Dicke von bis zu 400 µm haben.

6. Elektrochemischer Bleiakkumulator (1) nach einem der vorhergehenden Ansprüche, **dadurch gekennzeichnet, dass** die Porosität der Separatorschichten (5).50 bis 70 % beträgt.

## Claims

1. Electrochemical lead-acid rechargeable battery (1) having a plurality of alternately arranged anode and cathode plates (2a, 2b), which contain lead, having separators (3) in each case between adjacent anode and cathode plates (2a, 2b) and having an electrolyte which surrounds the anode and cathode plates (2a, 2b) as well as the separators (3), with the separators each having a microporous separator layer (5) composed of polyethylene, and having a fibre layer (6a, 6b) on each surface of the separator layer (5), the microporous separator layers (5) and the fibre layers (6a, 6b) each have a thickness of at least 100 µm, the average fibre length of the fibre layers is more than 1 mm, and the average fibre diameter of the fibre layers (6a, 6b) is more than 1 µm, **characterized in that** the fibre layers (6a, 6b) are composed of polyester non-woven and are firmly connected to the associated separator layer (5) in the edge areas, by that the fibre layers (6a, 6b) are ultrasound-welded in the edge areas to the associated separator layer (5) by means of an ultrasound bead (7a, 7b).

2. Electrochemical lead-acid rechargeable battery (1) according to Claim 1, **characterized in that** the separator layers (5) have a plurality of ribs on at least one surface.

3. Electrochemical lead-acid rechargeable battery (1) according to one of the preceding claims, **characterized in that** the fibre layers (6a, 6b) are in the form of a polyolefin fibre non-woven.

4. Electrochemical lead-rechargeable battery (1) according to one of the preceding claims, **characterized in that** the fibre layers (6a, 6b) have a thickness of up to 600 µm.

5. Electrochemical lead-acid rechargeable battery (1) according to one of the preceding claims, **characterized in that** the separator layers (5) have a thickness of up to 400µm.

6. Electrochemical lead-acid rechargeable battery (1) according to one of the preceding claims, **characterized in that** the porosity of the separator layers (5) is 50 to 70 %.

## Revendications

1. Accumulateur électrochimique au plomb (1) comportant un ensemble de plaques d'anode et de cathode (2a, 2b) contenant du plomb, installées de manière alternée, des séparateurs (3) étant prévu entre chaque fois deux plaques d'anode et de cathode (2a, 2b) voisines, et un électrolyte entourant les plaques d'anode et de cathode (2a, 2b) ainsi que les séparateurs (3),
les séparateurs ayant chacun une couche séparatrice (5) microporeuse en polyéthylène et sur chaque surface de la couche séparatrice (5), une couche de fibres (6a, 6b), et
les couches séparatrices (5) microporeuses et les couches de fibres (6a, 6b) ont une épaisseur respective d'au moins 100 µm, et
la longueur moyenne des fibres des couches de fibres est supérieure à 1 mm et le diamètre moyen des fibres des couches de fibres (6a, 6b) est supérieur à 1 µm,
**caractérisé en ce que**
les couches de fibres (6a, 6b) sont en un non-tissé de polyester et au niveau des zones du bord, elles sont reliées solidairement à la couche séparatrice (5) associée par sondage aux ultrasons des couches de fibres (6a, 6b) aux zones de bord par un cordon de soudure (7a, 7b) à la couche séparatrice (5) correspondante.

2. Accumulateur électrochimique au plomb (1) selon la revendication 1,
**caractérisé en ce que**
les couches séparatrices (5) ont un pluralité de nervures sur au moins une face.

3. Accumulateur électrochimique au plomb (1) selon les revendications précédentes,
**caractérisé en ce que**
les couches de fibres (6a, 6b) sont réalisées sous la forme d'un non-tissé de polyoléfines.

4. Accumulateur électrochimique au plomb (1) selon les revendications précédentes,
**caractérisé en ce que**
les couches de fibres (6a, 6b) ont une épaisseur allant jusqu'à 600 µm.

5. Accumulateur électrochimique au plomb (1) selon les revendications précédentes,
**caractérisé en ce que**
les couches séparatrices (5) ont épaisseur allant jusqu'à 400 µm.

6. Accumulateur électrochimique au plomb (1) selon les revendications précédentes,
**caractérisé en ce que**
la porosité des couches séparatrices (5) est comprise entre 50 % et 70 %.
